# EUROPÄISCHE PATENTSCHRIFT

(11) **EP 0 832 488 B1**
(45) Veröffentlichungstag und Bekanntmachung des Hinweises auf die Patenterteilung: **24.02.1999**
(21) Anmeldenummer: 96917333.5
(22) Anmeldetag: 11.06.1996
(51) Int. Cl.: G21C 19/07

(54) **LAGERKORB SOWIE LAGERGESTELL ZUR KOMPAKTEN LAGERUNG VON BRENNELEMENTEN UND STEUERSTÄBEN**
STORAGE HOLDER AND STORAGE RACK FOR COMPACT STORAGE OF FUEL ELEMENTS AND CONTROL RODS
RATELIER OU CASIER DE STOCKAGE POUR LE STOCKAGE COMPACT D'ELEMENTS COMBUSTIBLES ET DE BARRES DE COMMANDE

(30) Priorität: 14.06.1995 DE 19521214
(43) Veröffentlichungstag der Anmeldung: 01.04.1998
(73) Patentinhaber: SIEMENS AKTIENGESELLSCHAFT, 80333 München (DE)
(72) Erfinder: WASINGER, Karl, D-63165 Mühlheim (DE); WILHELMS, Eberhard, D-63263 Neu Isenburg (DE); MAAS, Rudi, D-61267 Neu-Anspach (DE)
(86) Internationale Anmeldenummer: DE9601017
(87) Internationale Veröffentlichungsnummer: WO9700521

(56) Entgegenhaltungen:
- DE-A- 2 259 669
- DE-A- 3 519 838
- JP-A-61 059 292
- JP-A-62 076 498
- US-A- 4 039 842
- US-A- 4 319 960

## Beschreibung

Die Erfindung betrifft einen Lagerkorb mit einer Mehrzahl von Einsätzen zur Aufnahme eines Brennelements in einer Kernkraftanlage sowie ein Brennelement-Lagergestell zur kompakten Lagerung von Brennelementen mit einer Tragstruktur zum Tragen der Brennelemente und einem Lagerkorb mit einer Mehrzahl von Einsätzen zur Aufnahme eines Brennelementes.

Bei Kernkraftanlagen zur Erzeugung von elektrischer Energie auf spaltbarem Material wird das spaltbare Material in sogenannten Brennelementen eingesetzt. Das spaltbare Material in den Brennelementen wird während des Betriebes der Kernkraftanlage in Folge einer nuklearen Kettenreaktion gespalten. Nachdem das spaltbare Material weitgehend verbraucht, d.h. abgebrannt ist, werden die abgebrannten Brennelemente in sogenannten mit Wasser gefüllten Lagerbecken zwischengelagert. Für die Aufnahme der Brennelemente sind in den Lagerbecken Brennelement-Lagergestelle vorgesehen.

In der DE 41 34 246 A1 ist ein Lagergestell für Brennelemente einer Kernkraftanlage beschrieben, bei dem auf einer Grundplatte mehrere Schächte mit im wesentlichen rechteckigem Querschnitt befestigt sind. Die Schächte stehen aufrecht auf der Grundplatte und sind schachbrettartig jeweils diagonal aneinander gegenüberliegend angeordnet. Ein Teil der diagonal aneinander gegenüberliegenden Schächte ist entlang aneinandergrenzender Längskanten durch wenigsten zwei Verbindungselemente miteinander verbunden. Ein erstes Verbindungselement hat eine hohe Steifigkeit in einer ersten Richtung, die parallel zur Grundplatte verläuft. Ein zweites Verbindungselement hat ebenfalls eine hohe Steifigkeit in einer zweiten Richtung, die ebenfalls parallel zur Grundplatte verläuft. Der Winkel zwischen der ersten Richtung und der zweiten Richtung beträgt zwischen 70° und 90°. Über die Verbindungselemente werden die Schächte mechanisch stabil mit einer hohen Tragfähigkeit miteinander zu einer Einheit verbunden. Die Wände der Schächte dienen als Absorptionsvorrichtung für Neutronenstrahlung und bestehen aus einem austenitischen Borstahl mit einem Borgehalt von bis zu 2 %. Das in der DE 41 34 246 Al beschriebene Brennelement-Lagergestell erlaubt eine kompakte Lagerung von Brennelementen, wobei sowohl in jedem Schacht als auch in den zwischen den Schächten gebildeten Hohlräumen jeweils ein Brennelement lagerbar ist. Brennelemente sowie Schächte sind entlang jeweils einer Hauptachse gestreckt, wobei die Hauptachsen im wesentlichen parallel zueinander verlaufen. Die Hauptachsen stehen dabei im wesentlichen senkrecht auf der Grundplatte des Lagergestells.

In der US-PS 4,960,560 ist ein Lagergestell für Brennelemente einer Siedewasser-Kernkraftanlage beschrieben. Das Lagergestell hat eine rechteckige Grundplatte, die auf Füßen ruht. Auf der Grundplatte ist eine Vielzahl von Schächten zur Aufnahme jeweils eines Brennelementes angeordnet. Die Schächte sind entlang einer Hauptachse, welche senkrecht auf der Grundplatte steht, gestreckt. Die Schächte sind schachbrettartig auf der Grundplatte angeordnet, wobei Schächte an der Außenkante der Grundplatte über ihre gesamte Höhe mit Blechen aneinandergeschweißt sind, so daß eine durchgehende geschlossene Außenwand gebildet wird. Im Boden der Grundplatte sind in jedem Schacht kreisförmige Öffnungen vorhanden. Einige der Öffnungen weisen zudem von der Kreisform abweichende Vertiefungen auf, so daß ein hierdurch eingeführtes Hebewerkzeug nach einer Drehung um einige Grad nicht mehr durch die Öffnung hindurchführbar ist. Hierdurch ist ähnlich dem Deckel einer Teekanne eine Verankerung des Hebelwerkzeugs geschaffen und dadurch die Möglichkeit des Hebens der Grundplatte gegeben.

Sowohl die DE 41 34 246 Al als auch die US-PS 4,960,560 betreffen lediglich die kompakte Lagerung von Brennelementen. Auf die Problematik der Lagerung anderer verbrauchter bzw. verstrahlter Kernbauteile, insbesondere Steuerelemente und Steuerstäbe einer Siedewasser-Kernkraftanlage, geht keine der beiden Schriften ein.

JP-A-61.059.292 und JP-A-62.072.498 beschreiben jeweils eine Lagerung von Brennelementen und Steuerelementen eines Kernreaktors in einem lagergestell mit Tragschächten, in denen jeweils sowohl ein Steuerelement als auch vier Brennelemente eingebracht sind.

Aufgabe der Erfindung ist es daher, einen Lagerkorb und ein Lagergestell für eine kompakte und kombinierte Lagerung von Brennelementen und Steuerelementen, insbesondere einer Siedewasser-Kernkraftanlage, anzugeben.

Erfindungsgemäß wird die auf einen Lagerkorb gerichtete Aufgabe durch einen Lagerkorb gelöst, der eine Mehrzahl von Einsätzen zur Aufnahme eines Brennelementes einer Kernkraftanlage hat, wobei die Einsätze derart angeordnet sind, daß ein kreuzförmiger Spalt zur Aufnahme eines Steuerstabes (Steuerelementes) gebildet ist.

Durch Ausbildung eines kreuzförmigen Spaltes zwischen den Einsätzen können diese über einen Steuerstab gestülpt werden, der einen entsprechenden kreuzförmigen Querschnitt aufweist. Steuerstab und die Einsätze sind entlang einer jeweiligen Hauptachse gestreckt, die im wesentlichen parallel zueinander verlaufen. Je nach Querschnittsform des Steuerstabes werden die Einsätze entsprechend angeordnet. Der Steuerstab kann dabei einen Querschnitt in Form eines einfachen Kreuzes mit jeweils vier senkrecht zueinander stehenden gleich langen Flügeln aufweisen. Die Flügel können allerdings auch unterschiedlich lang sein sowie nicht orthogonal zueinander stehen. Auch die Anzahl der Flügel kann von vier abweichen. Mit dieser Anordnung von Einsätzen zur Aufnahme eines Brennelementes können auf platzsparende Art und Weise sowohl die Steuerelemente als auch die Brennelemente zwischengelagert werden. Es kann somit von einem separaten Lagergestell oder speziellen Abhängevorrichtungen an den Wänden des Lagerbekkens oberhalb der Lagergestelle für Brennelemente abgesehen werden. Die Länge der Einsätze richtet sich nach der Länge der aufzunehmenden Brennelemente, wobei der radioaktiv-strahlende Bereich der Brennelemente zu Absorptionszwecken von dem jeweiligen Einsatz umschlossen ist. Der Einsatz bildet einen Absorberschacht mit einer Wandung aus vorzugsweise austenititschem Borstahl. Die Position des Einsatzes gegenüber dem Steuerelement richtet sich insbesondere nach der Form des Steuerelementes, wobei bei einem tellerförmigen Fußteil des Steuerelements der Einsatz geodätisch oberhalb des Fußteils angeordnet ist. Bei einem kreuzförmigen Fußteil kann der Einsatz sich auch über dieses Fußteil erstrecken. Der Einsatz und somit der Lagerkorb ragt mit Mitteln zum Heben über das Steuerelement hinaus. Hierdurch kann der Lagerkorb einfach über das Steuerelement gestülbt und von diesem wieder abgehoben werden.

Vorzugsweise haben die Einsätze eine rechteckige, insbesondere quadratische Querschnittsfläche. Hierdurch wird, insbesondere bei einem kreuzförmigen Steuerstab mit orthogonal aufeinanderstehenden Flügeln, eine besonders gute Platzausnutzung erreicht. Eine Anordnung aus Steuerstab und Lagerkorb hat somit eine im wesentlichen rechteckige, insbesondere quadratische Querschnittsfläche. Hierdurch lassen sich Steuerstab und Lagerkorb besonders einfach und platzsparend in einen Tragschacht eines Lagergestelles einbringen.

Vorzugsweise sind vier Einsätze vorgesehen, die in jedem Quadranten eines einfachen Kreuzes angeordnet werden können. Jeder Steuerstab kann somit unmittelbar von vier Brennelementen umgeben werden.

Benachbarte Einsätze sind vorzugsweise mittels zumindest jeweils einem Verbindungselement fest zu einer Einheit verbunden. Als Verbindungselement eignet sich ein oder mehrere Verbindungsbleche. Das Verbindungselement bzw. die Verbindungselemente sind an der Außenwandung benachbarter Einsätze verschweißt. Eine Verbindung benachbarter Einsätze kann dabei über die gesamte Höhe der Außenwandung erfolgen oder auch nur punktuell, d.h. über gewisse Außenwandungsbereiche, durchgeführt sein. Die so miteinander verbundenen Einsätze bilden den Lagerkorb als Einheit, wodurch dieser als Ganzes über einen Steuerstab stülpbar ist. Der Lagerkorb erfüllt vorzugsweise eine reine Lagerfunktion, d.h. er wird im unbeladenen Zustand über das Steuerelement gestülpt und erst danach mit Brennelementen beladen. Vor einem Abheben des Lagerkorbs von dem Steuerelement werden zuerst sämtliche Brennelemente aus dem Lagerkorb wieder entnommen. Der Lagerkorb kann gegebenenfalls auch als Transportbehälter ausgeführt sein, so daß er mit Brennelementen beladen über das Steuerelement stülpbar und von diesem wieder abhebbar ist. Auf diese Weise können Brennelemente ohne Umladen in einem Brennelement-Lagerbecken transportiert werden.

Vorzugsweise sind die Einsätze mit einem Stützelement zur Umschließung des Fußteils des Steuerstabes sowie zu ihrer Abstützung auf einer Tragstruktur eines Brennelement-Lagergestells verbunden. Das Stützelement kann hierbei als Rohr mit einem runden oder rechteckigen Querschnitt ausgeführt sein, wobei die Querschnittsfläche des Stützelementes die größte Querschnittsfläche des Fußteils überdeckt. Das Stützelement weist Mittel zur Befestigung der Einsätze auf, so daß diese insbesondere gegen eine Verdrehung gesichert sind. Mit dem Stützrohr wird erreicht, daß sich die Unterkanten der Brennelemente oberhalb des Fußstückes eines jeweiligen zugeordneten Steuerelementes befinden. Das Stützelement ist seinerseits gegen Verdrehen gerichtet.

Die Einsätze sind vorzugsweise auf einer Grundplatte befestigt, insbesondere verschweißt, welche ebenfalls einen kreuzförmigen Spalt aufweist, welcher groß genug ist, um die Grundplatte über einen entsprechenden Steuerstab zu stülpen.

Um das Überstülpen des Steuerstabes durch die Grundplatte und die Einsätze zu erleichtern, verjüngt sich der kreuzförmige Spalt über die Dicke der Grundplatte zu den Einsätzen hin. Hierdurch wird der Lagerkorb bei der Überstülpung des Steuerelements durch dieses zentriert und damit das Absenken des Lagerkorb entlang der Hauptachse des Steuerelements deutlich vereinfacht. Zur Verdrehsicherheit der Einsätze ist vorzugsweise an dem oberen Ende der Einsätze ein dem kreuzförmigen Spalt angepaßtes kreuzförmiges Verstärkungselement angeordnet. Dieses sichert die Einsätze, welche als Vierkantrohre ausgebildet sein können, und stützt diese ab. Zudem kann das Verstärkungselement über Mittel zum Heben und Transportieren des Lagerkorbs verfügen. Es kann zumindest einen Haken oder einen Transportbügel aufweisen oder als solcher ausgestaltet sein. An die Mittel kann ein Greifwerkzeug angreifen, so daß der Lagerkorb in einem Brennelement-Lagerbecken transportierbar ist und insbesondere in ein Lagergestell eingesetzt und wieder herausgenommen werden kann. Vorzugsweise hat der Lagerkorb ein lösbares Arretierungselement zur Sicherung der Einsätze gegenüber einem unbeabsichtigten Heben. Das Arretierungselement kann ein um einen Drehpunkt drehbarer Fallriegel sein, der in dem kreuzförmigen Spalt aufgrund seines Eigengewichtes herunterklappt, so daß nach Überstülpung des Steuerstabes mit dem Lagerkorb der Fallriegel unterhalb eines Vorsprunges eines Tragschachts zu liegen kommt. Bei einem unbeabsichtigten Heben des Lagerkorbs, beispielsweise bei einer Entnahme eines Brennelementes aus einem Einsatz, wird der Fallriegel gegen den Vorsprung (Niederhalter) gedrückt und dadurch eine weitere Aufwärtsbewegung des Lagerkorbes unterbunden. Das Arretierungselement kann durch ein entsprechend geformtes in den kreuzförmigen Spalt hineinführbares Greifwerkzeug entriegelt werden. Insbesondere kann ein Fallriegel nach oben geklappt werden und somit der Lagerkorb von dem Steuerelement und aus dem Tragschacht gehoben werden.

Die auf ein Brennelement-Lagergestell zur kompakten Lagerung von Brennelementen und Steuerstäben einer Kernkraftanlage, insbesondere einer Siedewasser-Kernkraftanlage, gerichtete Aufgabe wird gelöst durch eine Brennelement-Lagergestell mit einer Tragstruktur zum Tragen der Brennelemente und der Steuerstäbe und mit einem Lagerkorb mit einer Mehrzahl von Einsätzen zur Aufnahme eines Brennelementes, wobei die Einsätze derart angeordnet sind, daß ein kreuzförmiger Spalt zur Aufnahme eines Steuerstabes gebildet ist. Auf der Tragstruktur sind vorzugsweise Tragschächte zur Aufnahme eines Steuerstabes und eines Lagerkorbes vorgesehen. Die Tragschächte können dabei wie in der DE 41 34 246 A1 angeordnet und über die darin angegebenen Verbindungselemente miteinander verbunden sein. Das Lagergestell kann somit auf die vorteilhaften Eigenschaften des in der DE 41 34 246 A1 beschriebenen Lagergestells zurückgreifen, wobei vor allem durch die Verbindungselemente eine mechanisch äußerst stabile Struktur des Lagergestells erreicht wird, ohne daß ein zusätzlicher Tragverband am geodätisch oberen Ende der Schächte erforderlich ist. Das Steuerelement sowie der Lagerkorb können dabei sowohl in jedem Tragschacht als auch in den Zwischenpositionen zwischen den schachbrettartigen angeordneten Tragschächten eingesetzt werden. Vorzugsweise eignen sich der Lagerkorb und das Lagergestell zur kompakten Zwischenlagerung von Brennelementen und Steuerelementen einer Siedewasser-Kernkraftanlage.

In einem einem Brennelement-Lagergestell mit einer Tragstruktur und darauf angeordneten Tragschächten werden in einem jeweiligen Tragschacht sowohl ein Steuerstab als auch zumindest ein Brennelement, insbesondere vier Brennelemente, eingebracht. Durch eine schachbrettartige Anordnung der Tragschächte bilden diese Zwischenräume, in denen jeweils ebenfalls sowohl ein Steuerstab als auch ein Brennelement angeordnet wird. Hierdurch wird eine besonders kompakte Lagerung von Steuerstäben und Brennelementen erreicht, wodurch die Anzahl der lagerbaren Brennelemente gegenüber einer separaten Lagerung von Steuerstäben deutlich erhöht werden kann.

Anhand der Zeichnung werden das Brennelement-Lagergestell sowie der Lagerkorb näher erläutert. Es zeigen:
- FIG 1: einen Ausschnitt eines Brennelement-Lagergestells in einem Längsschnitt mit einem Lagerkorb,
- FIG 2: eine vergrößerte Darstellung des oberen Bereiches des Brennelement-Lagergestells gemäß FIG 1,
- FIG 3: einen Ausschnitt des Brennelement-Lagerbeckens gemäß FIG 2 in einem Querschnitt,
- FIG 4: eine vergrößerte Darstellung des unteren Bereiches des Brennelement-Lagergestells nach FIG 1 und
- FIG 5: einen Querschnitt durch den unteren Bereich eines Brennelement-Lagergestells.

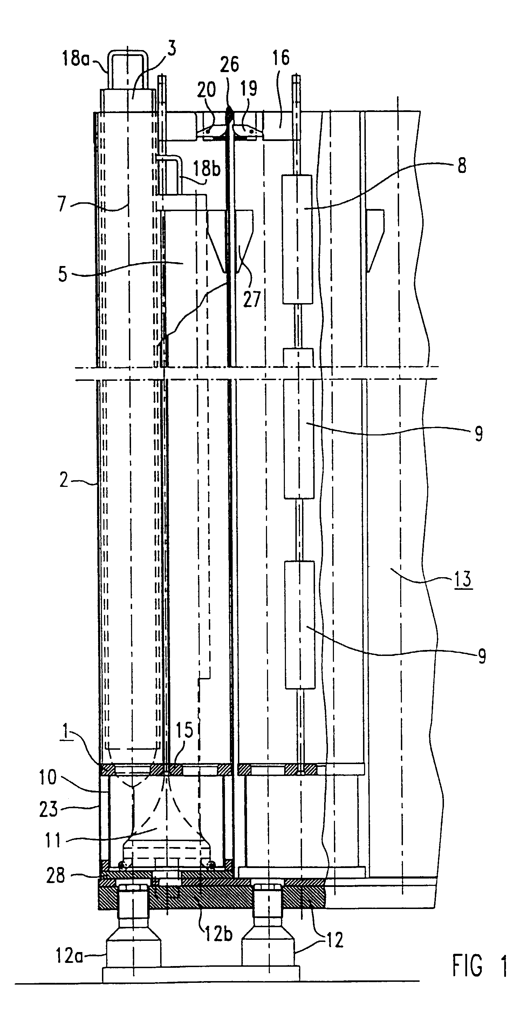

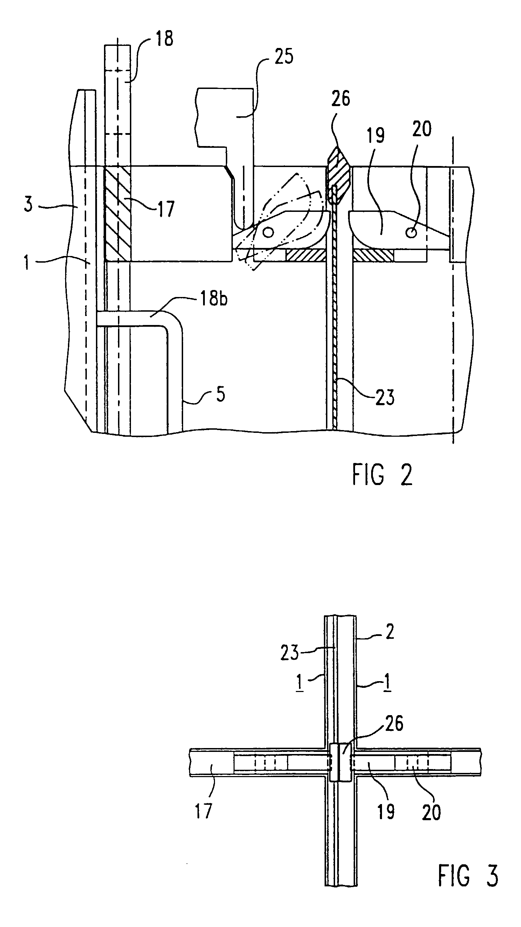

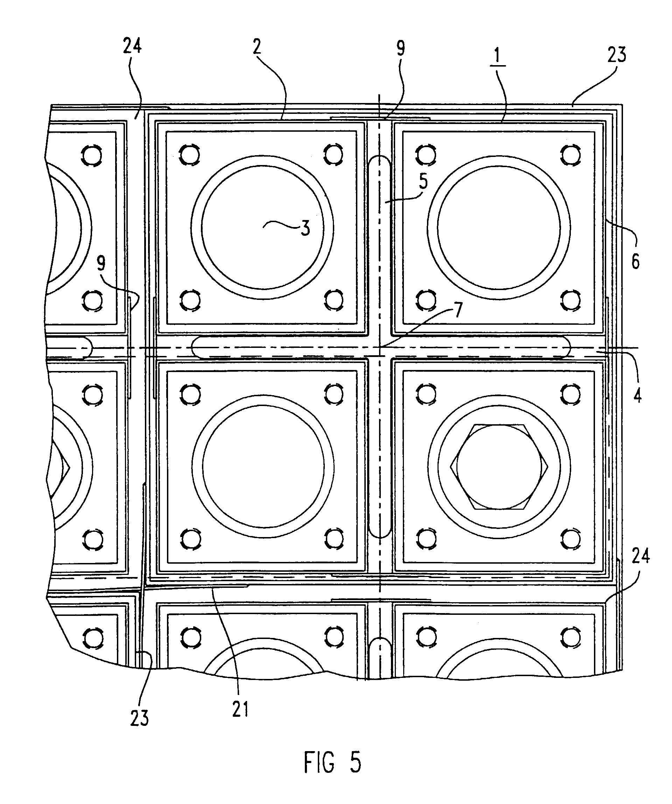

FIG 1 zeigt in einem Längsschnitt einen Ausschnitt eines Brennelement-Lagergestells 13, welches eine Tragstruktur 12 mit einer auf Füßen 12a abgestützten Platte 12b aufweist. Auf der Platte 12b sind eine Mehrzahl von länglichen Tragschächten 23 mit quadratischer Querschnittsfläche aufgestellt. Die Tragschächte 23 erstrecken sich entlang einer Hauptachse 7, die senkrecht auf der Ebene der Platte 12b steht. Der Übersichtlichkeit halber ist nur ein Tragschacht 23 dargestellt. In den Tragschacht 23 ist ein Steuerstab 5 eines Siedewasser-Reaktors eingebracht, der ein Fußteil 11 aufweist, mit welchem er auf einer Bodenplatte 28 des Tragschachtes 23 aufsitzt. Der Steuerstab 5, welcher einen kreuzförmigen Querschnitt und ein tellerförmiges Fußteil 11 hat (siehe FIG 5) ist von einem Lagerkorb 1 überstülpt. Der Lagerkorb 1 weist vier entlang der Hauptachse 7 sich erstreckende Einsätze 2 auf, die auf einer Grundplatte 15 ruhen, die oberhalb des Fußteiles 11 des Steuerstabes 5 zu liegen kommt. Die Grundplatte 15 der Einsätze 2 ist mit einem rohrförmigen Stützelement 10 verbunden. Das Stützelement 10 umschließt den Fußteil 11 des Steuerstabes 5 und ist mit der Bodenplatte 28 des Tragschachtes 23 lösbar fixiert, insbesondere mit vier Stiften. In jedem Einsatz 2 ist ein Brennelement 3 angeordnet, von denen der Übersichtlichkeit halber ebenfalls nur eines dargestellt ist. Benachbarte Einsätze 2 sind über eine Mehrzahl von Verbindungselementen 8, die als Verbindungsbleche 9 ausgeführt sind, miteinander fest verschweißt. Im geodätisch oberen Bereich weist jeder Einsatz 2 ein als Fallriegel 19 ausgebildetes Arretierungselement auf. Der Fallriegel 19 ist um einen Drehpunkt 20 drehbar und liegt in einer in Folge seines Eigengewichtes eingenommenen Position weitgehend an dem Tragschacht 23 an. Geodätisch oberhalb des Fallriegels 19 hat der Tragschacht 23 einen Niederhalter 26 (siehe FIG 2). Bei einem Anheben des Lagerkorbes 1 wird dieser dadurch, daß der Fallriegel 19 an dem Niederhalter 26 anliegt an einer ungewollten Aufwärtsbewegung gehindert. Geodätisch unterhalb des Fallriegels 19 sind Zentrierungen 27 vorgesehen, die eine Zentrierung des Lagerkorbs 1 und des Steuerstabes 5 in dem Tragschacht 23 gewährleisten. Mit einer Anordnung der Einsätze 2 zur Aufnahme jeweils eines Brennelementes 3 um den kreuzförmigen Steuerstab 5 herum wird eine kombinierte und komprimierte Zwischenlagerung von Brennelementen 3 und Steuerstäben 5 in einem Brennelement-Lagerbecken 13 erreicht. Diese Anordnung ist für jeden beliebigen Steuerstab mit einem kreuzförmigen Querschnitt erreichbar. Für die Erzielung einer komprimierten Zwischenlagerung von Brennelementen 3 und Steuerstäben 5 kommt es auch nicht auf die konkrete Ausgestaltung des Fußteiles 11 des Steuerstabes 5 an. Somit ist eine kompakte Lagerung von Steuerstäben 5 der gängigen Fertigungen möglich.

FIG 2 zeigt in vergrößertem Maßstab den oberen Bereich aus FIG 1, wobei deutlich die Drehbarkeit des Fallriegels 19 um den Drehpunkt 20 erkennbar ist. Dieser Fallriegel 19 kann über das dargestellte Greifwerkzeug 25, welches von oben in den Einsatz 2 hineingeführt wird, aus der verriegelten Position herausgedreht werden. Hierdurch kann der Einsatz 2 an dem Niederhalter 26 des Tragschachtes 23 vorbei aus dem Tragschacht 23 herausgehoben werden. Ein Heben des Einsatzes 2 erfolgt über ein Verstärkungselement 17 im geodätisch oberen Bereich des Einsatzes 2. Dieses Verstärkungselment 17 ist mit einem Tragebügel 18 versehen, an dem ein nicht dargestelltes Hebewerkzeug eingreifen kann. Hierdurch ist ein einfaches Be- und Entladen des Tragschachtes 23 mit einem Steuerstab 5 und dem Lagerkorb 1 sowie den Brennelementen 3 gewährleistet. Brennelemente 3 sowie Steuerstab 5 verfügen hierzu ebenfalls über einen entsprechenden Tragebügel 18a, 18b (vgl. FIG 1), wobei der Tragbügel 18a des Brennelementes 3 weiter aus dem Tragschacht 23 herausragt als der Tragbügel 18b des Steuerelementes 5. Das Beladen des Tragschachts 23 erfolgt derart, daß zuerst das Steuerelement 5, danach der Lagerkorb 1 und schließlich die Brennelemente 3 eingefügt werden. Das Entladen erfolgt in der umgekehrten Reihenfolge. Der Lagerkorb 1 kann auch als Transportbehälter ausgeführt sein, so daß ein mit Brennelementen 3 bereits beladener Lagerkorb 1 in den Tragschacht 23 eingeführt bzw. ausgeführt werden kann.

FIG 3 zeigt in einem Querschnitt den Bereich um einen Niederhalter 26 herum. Der Niederhalter 26 ist an dem Tragschacht 23 befestigt, so daß Arretierungselemente 19 zweier benachbarter Lagerkörbe 1 von dem Niederhalter 26 gegen eine Aufwärtsbewegung blockiert sind.

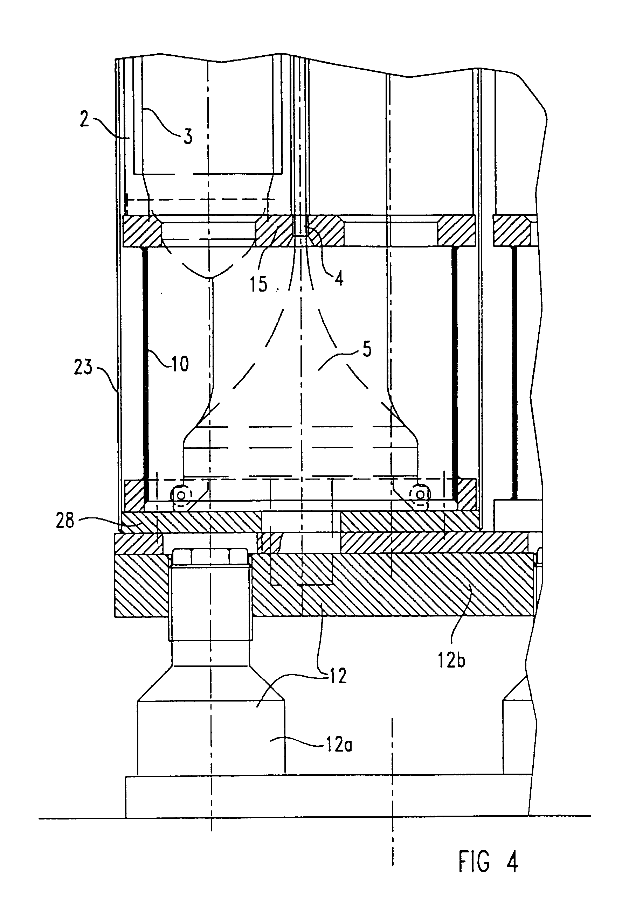

FIG 4 zeigt in vergrößertem Maßstab einen Ausschnitt des Lagergestells 13 nach FIG 1 in einem Bereich zwischen Tragstruktur 12 und Grundplatte 15 der Einsätze 2. Die Bedeutung der Bezugszeichen stimmt dabei mit derjenigen aus FIG 1 überein.

In FIG 5 ist ein Querschnitt durch das Lagergestell 13 dargestellt. Der Übersichtlichkeit halber ist nur ein Lagerkorb 1 vollständig gezeigt, welcher in einem entsprechenden Tragschacht 23 eingebracht ist. Benachbarte Tragschächte 23 sind über kreuzförmige Abstandselemente 21 miteinander fest verbunden, wobei die Flügel der Abstandselemente 21 nicht orthogonal zueinander sind. Die Querschnittsfläche 4 des Lagerkorbes 1 ist quadratisch. Durch vier innerhalb des Quadrates symmetrisch zu einer Hauptachse 7 angeordnete Einsätze 2 mit ebenfalls quadratischer Querschnittsfläche ist ein kreuzförmiger Spalt 4 gebildet. In dem Spalt 4 ist ein kreuzförmiger Steuerstab 5 ebenfalls symmetrisch zur Hauptachse 7 eingebracht. Benachbarte Einsätze 2 sind über jeweilige Verbindungsbleche 9 den kreuzförmigen Spalt 4 abschließend miteinander verbunden, so daß sie eine Einheit bilden. Innerhalb jedes Einsatzes 2 ist ein Brennelement 3 angeordnet. Die Einsätze 2 umgeben dabei den Steuerstab 5. Durch eine Anordnung der Einsätze 2 den Steuerstab 5 umgebend, sind in jedem Tragschacht 23 vier Brennelemente 3 und ein Steuerstab 5 einbringbar. Hierdurch wird eine besonders kompakte Zwischenlagerung von Brennelementen 3 und Steuerstäben 5 eines Siedewasser-Reaktors ermöglicht. Die quadratischen Tragschächte 23 sind schachbrettmusterartig angeordnet, wobei zwischen den Tragschächten 23 Zwischenpositionen 24 gebildet sind, die ebenfalls mit einem Lagerkorb 1 und einem Steuerstab 5 beschickbar sind.

Die Erfindung zeichnet sich durch einen Lagerkorb aus, der über einen kreuzförmigen Steuerstab eines Siedewasser-Reaktors stülpbar ist. Der Lagerkorb weist hierzu vorzugsweise vier Einsätze auf, die so voneinander beabstandet und miteinander fest verbunden sind, daß zwischen ihnen ein kreuzförmiger Spalt gebildet wird, in dem der Steuerstab positionierbar ist. Durch diese Anordnung können ein Steuerstab und vier Brennelemente in einem einzigen Tragschacht eines Brennelement-Lagergestells untergebracht werden. Hierdurch wird eine besonders kompakte und kombinierte Zwischenlagerung von Brennelementen und Steuerstäben eines Siedewasser-Reaktors in einem Brennelement-Lagerbecken erreicht.

## Patentansprüche

1. Lagerkorb (1) mit einer Mehrzahl von Einsätzen (2) zur Aufnahme eines Brennelementes (3) einer Kernkraftanlage, wobei die Einsätze (2) derart angeordnet sind, daß ein kreuzförmiger Spalt (4) zur Aufnahme eines Steuerstabes (5) gebildet ist.

2. Lagerkorb (1) nach Anspruch 1, **dadurch gekennzeichnet,** daß die Einsätze (2) eine rechteckige, insbesondere quadratische, Querschnittsfläche (6) haben und sich in einer Richtung senkrecht zur Querschnittsfläche (6) entlang einer Hauptachse (7) erstrecken.

3. Lagerkorb (1) nach einem der vorhergehenden Ansprüche, **dadurch gekennzeichnet,** daß vier Einsätze (2) vorgesehen sind.

4. Lagerkorb (1) nach einem der vorhergehenden Ansprüche, **dadurch gekennzeichnet,** daß benachbarte Einsätze (2) mittels zumindest eines Verbindungselementes (8), insbesondere eines Verbindungsbleches (9), fest zu einer Einheit verbunden sind.

5. Lagerkorb (1) nach einem der vorhergehenden Ansprüche, **dadurch gekennzeichnet,** daß ein Stützelement (10) zur Umschließung des Fußteiles (11) des Steuerstabes (5) und zur Abstützung der Einsätze (2) auf einer Tragstruktur (12) eines Brennelement-Lagergestelles (13) vorgesehen ist.

6. Lagerkorb (1) nach Anspruch 5, **dadurch gekennzeichnet,** daß das Stülzelement (10) Mittel (14) zur Befestigung, insbesondere Verdrehsicherheit, der Einsätze (2) aufweist.

7. Lagerkorb (1) nach einem der vorhergehenden Ansprüche, **dadurch gekennzeichnet,** daß die Einsätze (2) auf einer einen kreuzförmigen Spalt (4) aufweisenden Grundplatte (15) aufgesetzt und befestigt sind, wobei sich der Spalt (4) über die Dicke der Grundplatte (14) zu den Einsätzen (2) hin verjüngt.

8. Lagerkorb (1) nach einem der vorhergehenden Ansprüche, **dadurch gekennzeichnet,** daß die Einsätze (2) an ihrem oberen Ende (16) ein kreuzförmiges Verstärkungselement (17) zur Verdrehsicherheit aufweisen.

9. Lagerkorb (1) nach Anspruch 8, **dadurch gekennzeichnet,** daß das Verstärkungselement (17) Mittel (18), insbesondere zumindest einen Haken, zum Heben und Transportieren aufweist.

10. Lagerkorb (1) nach einem der vorhergehenden Ansprüche, **dadurch gekennzeichnet,** daß zumindest ein lösbares Arretierungselement (19), insbesondere ein um ein Drehpunkt (20) drehbarer Fallriegel (19), zur Sicherung der einsätze (2) gegenüber einem unbeabsichtigen Heben vorgesehen ist.

11. Brennelement-Lagergestell (13) zur kompakten Lagerung von Brennelementen (3) und Steuerstäben (5) einer Kernkraftanlage, insbesondere einer Siedewasser-Kernkraftanlage, mit einer Tragstruktur (12) zum Tragen der Brennelemente (3) und der Steuerstäbe (5) und mit einem Lagerkorb (1) mit einer Mehrzahl von Einsätzen (2) zur Aufnahme eines Brennelementes (3), wobei die Einsätze (2) derart angeordnet sind, daß ein kreuzförmiger Spalt (4) zur Aufnahme eines Steuerstabes (5) gebildet ist.

12. Lagergestell (13) nach Anspruch 11, **dadurch gekennzeichnet,** daß auf der Tragstruktur (12) Tragschächte (23) zur Aufnahme je eines Steuerstabes (5) und eines Lagerkorbs (1) vorgesehen sind.

## Claims

1. Storage basket (1) with a plurality of inserts (2) for accommodating a fuel element (3) of a nuclear power plant, wherein the inserts (2) are arranged in such a way that a cruciform gap (4) is formed to accommodate a control rod (5).

2. Storage basket (1) according to claim 1, characterized in that the inserts (2) have a rectangular, in particular square, cross-sectional area (6) and extend along a main axis (7) in a direction perpendicular to the cross-sectional area (6).

3. Storage basket (1) according to one of the preceding claims, characterized in that four inserts (2) are provided.

4. Storage basket (1) according to one of the preceding claims, characterized in that adjacent inserts (2) are connected fixedly to form one unit by means of at least one connecting element (8), in particular a connecting plate (9).

5. Storage basket (1) according to one of the preceding claims, characterized in that a supporting element (10) is provided to enclose the foot part (11) of the control rod (5) and to support the inserts (2) on a carrying structure (12) of a fuel-element storage rack (13).

6. Storage basket (1) according to claim 5, characterized in that the supporting element (10) has means (14) to secure the inserts (2), in particular against rotation.

7. Storage basket (1) according to one of the preceding claims, characterized in that the inserts (2) are placed on and secured to a base plate (15) having a cruciform gap (4), wherein the gap (4) tapers over the thickness of the base plate (14) towards the inserts (2).

8. Storage basket (1) according to one of the preceding claims, characterized in that the inserts (2) have at their upper end (16) a cruciform reinforcing element (17) for securing against rotation.

9. Storage basket (1) according to claim 8, characterized in that the reinforcing element (17) has means (18), in particular at least one hook, for lifting and transporting.

10. Storage basket (1) according to one of the preceding claims, characterized in that at least one releasable locking element (19), in particular a drop latch (19) which is rotatable about a centre of rotation (20), is provided to secure the inserts (2) against unintentional lifting.

11. Fuel-element storage rack (13) for the compact storage of fuel elements (3) and control rods (5) of a nuclear power plant, in particular a boiling-water nuclear power plant, having a carrying structure (12) for carrying the fuel elements (3) and the control rods (5) and having a storage basket (1) with a plurality of inserts (2) to accommodate a fuel element (3), wherein the inserts (2) are arranged in such a way that a cruciform gap (4) is formed to accommodate a control rod (5).

12. Storage rack (13) according to claim 11, characterized in that carrying wells (23) to accommodate a respective control rod (5) and a storage basket (1) are provided on the carrying structure (12).

## Revendications

1. Casier (1) de stockage comportant une pluralité d'inserts (2) pour la réception d'un assemblage (3) combustible d'une centrale nucléaire, les inserts (2) étant disposés de manière à former un intervalle (4) en forme de croix pour la réception d'une barre (5) de commande.

2. Casier (1) de stockage suivant la revendication 1, caractérisé en ce que les inserts (2) ont une surface (6) de section transversale rectangulaire, notamment carrée, et s'étendent dans une direction perpendiculairement à la surface (6) de section transversale, suivant un axe (7) principal.

3. Casier (1) de stockage suivant l'une des revendications précédentes, caractérisé en ce qu'il est prévu quatre inserts (2).

4. Casier (1) de stockage suivant l'une des revendications précédentes, caractérisé en ce que des inserts (2) voisins sont reliés de manière fixe à une unité au moyen d'un élément (8) de liaison, notamment d'une tôle (9) de liaison.

5. Casier (1) de stockage suivant l'une des revendications précédentes, caractérisé en ce qu'un élément (10) de support est prévu pour entourer la partie (11) de base de la barre (5) de commande et pour soutenir les inserts (2) sur une structure (12) de support d'un bâti (13) de stockage d'assemblage combustible.

6. Casier (1) de stockage suivant la revendication 5, caractérisé en ce que l'élément (10) de soutien comporte des moyens (14) pour la fixation, notamment bloqués en rotation, des inserts (2).

7. Casier (1) de stockage suivant l'une des revendications précédentes, caractérisé en ce que les inserts (2) sont enfilés sur une plaque (15) de base comportant une fente (4) en forme de croix et y sont fixés, la fente (4) rétrécissant sur l'épaisseur de la plaque (14) de base en direction des inserts (2).

8. Casier (1) de stockage suivant l'une des revendications précédentes, caractérisé en ce que les inserts (2) comportent à leur extrémité (16) supérieure un élément (17) de renforcement en forme de croix pour le blocage en rotation.

9. Casier (1) de stockage suivant la revendication 8, caractérisé en ce que l'élément (17) de renforcement comporte des moyens (18), notamment au moins un crochet, pour le levage et le transport.

10. Casier (1) de stockage suivant l'une des revendications précédentes, caractérisé en ce qu'il est prévu au moins un élément (19) de blocage amovible, notamment un loquet (19) tournant par rapport à un centre (20) de rotation pour empêcher tout soulèvement involontaire des inserts (2).

11. Bâti (13) de stockage d'assemblage combustible pour stocker de manière peu encombrante des assemblages (3) combustibles et des barres (5) de commande d'une installation de centrale nucléaire, notamment d'une installation de centrale nucléaire à eau bouillante, comportant une structure (12) de support pour porter les assemblages (3) combustibles et les barres (5) de commande et comportant un casier (1) de stockage ayant une pluralité d'inserts (2) pour recevoir un assemblage (3) combustible, les inserts (2) étant disposés de telle manière qu'une fente (4) en forme de croix est formée pour la réception d'une barre (5) de commande.

12. Bâti (13) de stockage suivant la revendication 11, caractérisé en ce qu'il est prévu sur la structure (12) de support des puits (23) de support pour la réception chacun d'une barre (5) de commande et d'un casier (1) de stockage.
